# EUROPEAN PATENT SPECIFICATION

(11) **EP 3 734 030 B1**
(45) Date of publication and mention of the grant of the patent: **16.11.2022**
(21) Application number: 20171966.3
(22) Date of filing: 29.04.2020
(51) Int. Cl.: F01M 1/08, F01M 1/16, F01M 11/02, F02F 1/20, F16N 7/38, F16N 29/02

(54) **MULTI-LUBRICANT CYLINDER LUBRICATION SYSTEM FOR A LARGE TWO-STROKE INTERNAL COMBUSTION ENGINE**
MEHRSCHMIERSTOFFZYLINDERSCHMIERSYSTEM FÜR EINEN GROSSEN ZWEITAKTVERBRENNUNGSMOTOR
SYSTÈME DE LUBRIFICATION DE CYLINDRE MULTI-LUBRIFIANTS POUR UN GRAND MOTEUR À COMBUSTION INTERNE À DEUX TEMPS

(30) Priority: 01.05.2019 DK PA201970276
(43) Date of publication of application: 04.11.2020
(73) Proprietor: MAN Energy Solutions, filial af MAN Energy Solutions SE, Tyskland, 2450 Copenhagen SV (DK)
(72) Inventor: Blázquez Moreno, Javier, DK-2450 Copenhagen SV (DK)
(74) Representative: Nordic Patent Service A/S

(56) References cited:
- EP-A1- 3 404 224
- WO-A1-2008/141650
- CN-A- 106 930 799
- DE-A1-102013 002 743
- JP-B2- H 081 138

## Description

### TECHNICAL FIELD

The disclosure relates to a cylinder lubrication apparatus for a large two-stroke uniflow internal combustion engine, in particular to an apparatus for supplying cylinder lubrication liquid to the inner surface of a cylinder liner of a large two-stroke uniflow internal combustion engines.

### BACKGROUND

Large two-stroke uniflow turbocharged internal combustion crosshead engines are typically used as propulsion systems for large ships or as a prime mover in power plants. The sheer size, weight and power output renders them quite different from common combustion engines and places large two-stroke turbocharged internal combustion engines in a class for themselves.

Large two-stroke internal combustion engines are conventionally operated with a liquid fuel such as e.g. fuel oil or in particular heavy fuel oil due to the low costs of the latter type of fuel. In particular, these liquid fuels, such as Marine fuel oil or heavy fuel oil contain varying amounts of sulphur, which can range from 0.3 to 4.5% by weight. During fuel combustion, the sulphur is oxidized to SO2 and SO3. A portion of these sulphur oxides reacts with water (present as a combustion product) during combustion and forms sulphurous and sulphuric acids. These acids are very corrosive to engine components and need to be neutralized to prevent corrosive wear. Thus, bases are needed in the cylinder lubrication liquid to neutralize acids, i.e. oil-soluble bases must be present in cylinder lubrication liquids that are supplied to the inner surface of the cylinders of a large two-stroke internal combustion engine. The cylinder lubrication liquid is typically an oil (often referred to as cylinder oil) with oil-soluble bases (additives).

In the recent past, large two-stroke internal combustion engines are increasingly being operated with fuel with lower sulfur content, such as e.g. liquid natural gas, ethanol, or marine diesel. When the engine operates with such a fuel with the lower sulfur content, a cylinder lubrication oil with a less high pH can be used, with the advantage of using less pH lowering additives in the cylinder oil. Further, using a cylinder oil with a high pH and a high amount of pH lowering additives when the engine is operating on a fuel with a low sulfur content has the disadvantage of these additives will not react with acidic combustion products thereby creating a risk that these unused additives form deposits at undesired locations in the engine and its exhaust system.

The cylinder lubrication liquid (oil) is relatively costly and the cylinder lubrication oil that is applied to the inner surface of the cylinder liner is consumed during engine operation, i.e. a continuous fresh supply of cylinder lubrication liquid is needed during engine operation. The consumption of cylinder lubrication liquid is a significant factor in the operation of a large slow running two-stroke uniflow internal combustion engine with crossheads. Thus, it is also an economic advantage to operate with a cylinder oil with a lower capacity to neutralize acidic combustion products, when this neutralizing capacity is not required.

Consequently, there is a need for efficient and accurate lubrication of the inner surface of the cylinder liners, ensuring proper protection of the latter and minimal consumption of the costly cylinder lubrication oil with the appropriate capacity to neutralize acidic combustion products in relation to the operating conditions of the engine.

Another property of the cylinder lubrication oil is its kinematic viscosity. The optimal kinetic viscosity may depend on the operating conditions, such as operating the engine at a low to medium load or at a high load. It can be advantageous to use a cylinder lubrication liquid with a lower kinematic viscosity at certain of engine operating conditions and operating the engine with a cylinder lubrication liquid with a higher kinematic viscosity at other engine operating conditions.

The injection of cylinder lubrication liquid is dosed according to engine load and engine status, as well as the fuel properties. Further, during the running-in of a new cylinder liner approximately double the amount of lubrication liquid needs to be applied to the inner surface of the cylinder liner.

The cylinder lubrication oil injections are usually timed, such that injections are made regularly relative to the revolutions of the engine. The injection of the lubrication liquid takes place either before or when the engine piston passes the injection quills (injectors) during the compression stroke. The injectors are distributed evenly around the circumference of the cylinder liner.

One type of apparatus for supplying cylinder lubrication liquid has a plurality of dosing plungers that are moved by a common drive by a linear actuator. When the linear actuator is activated the dosing plungers make a full stroke and each dosing plunger pumps out a fixed predetermined amount of cylinder lubrication oil to the respective injectors in a cylinder liner. Typically, the common drive that connects the dosing plungers to the linear actuator makes a return stroke by the action of the helical spring or other biasing means. In this type of cylinder lubrication apparatus, the dosing plungers can only make the full stroke, and adjustment of the feed rate of cylinder lubrication liquid to the inner surface of the cylinder liner is achieved by changing the number of engine revolutions between cylinder lubrication injection events. The highest feed rate is obtained by activating the linear actuator for each engine revolution.

The feed rate needs to be approximately doubled when running in a new cylinder liner. Thus, a cylinder lubrication device to be able to handle a feed rate that ranges from the low feed rate required at low engine loads for a cylinder liner that has been run-in to the doubled high feed rate at maximum engine load for a new cylinder liner.

Lower feed rates are obtained by skipping the injection event for one or more engine revolutions. Especially, for lower engine loads there can be a relatively high number of dry engine revolutions where no cylinder lubrication liquid injection event takes place. However, ideally, an injection event should take place for each engine revolution since experience has shown that dry engine revolutions between cylinder lubrication liquid injections are detrimental to the protection of the inner surface of the cylinder liner

Another type of apparatus for supplying cylinder lubrication liquid is provided with a linear actuator that can make a part stroke of any desired and controllable length. With this cylinder lubrication device injection event will typically take place for each engine revolution with the amount delivered being exactly adjusted to the current needs of the engine by adjusting the length of the stroke of the linear actuator and thereby the length of the stroke of the dosing plungers. This type of apparatus for supplying cylinder lubrication liquid is capable of providing the exactly required rate of cylinder lubrication liquid under all engine operating conditions. However, this type of apparatus for supplying cylinder lubrication liquid is significantly more expensive than the above-described cylinder lubrication device with a fixed length of the pump stroke.

EP3404224 discloses a lubricating device for a large diesel engine with a first reservoir for a first lubricant for lubrication of the cylinders, with a second reservoir for a second lubricant for lubricating the cylinder, with a lubricant supply for introducing the first or the second lubricant in the cylinder, with a lubricant pump, with which the first or the second lubricant in the lubricant supply can be conveyed, and with a switching member, with which the lubricant pump optionally the first or the second lubricant can be fed. Between the switching member and the storage containers, a first intermediate container and a second intermediate container are provided, wherein the first intermediate container is connected with the first reservoir, via a first supply line with the switching member, and wherein the second intermediate container is connected with the second reservoir via a second supply line and via a second supply line with the switching member. This supply system allows for selectively supplying either first or the second lubricant to the cylinders of the engine. However, this system is relatively complicated in that it requires a switching valve for each cylinder and an intermediate reservoir for each lubricant.

WO2008009291 discloses a hydraulic lubricating apparatus for dosing cylinder lubricating oil. The dosing system includes a supply line and a return line connected with the lubricating apparatus via each one or more valves for supplying hydraulic oil, a central hydraulic oil feed pump connected with hydraulic cylinders, each having a hydraulic piston and which may be subjected to pressure by hydraulic oil via the supply line, a number of injection units corresponding to a multiple of the cylinder number in the engine and which are connected with each their dosing cylinder with a dosing piston and a supply line for cylinder lubricating oil. In order to provide a system which is reliable and cheap and where there is no risk of disruptions, even if a hydraulic cylinder fails, the lubricating apparatus is designed with a distributor plate which at one side is in contact with the dosing pistons and which at its other side is in contact with two or more hydraulic pistons for displacing the distributor plate for activating the dosing pistons.

DE102013002743A1 discloses a stem for supplying cylinder lubrication liquid according to the preamble of claim 1.

Consequently, it is an object of the present invention to provide an inexpensive and simple system for supplying cylinder lubrication liquid that can selectively provide one of several cylinder lubrication liquids.

### SUMMARY

It is an object of the invention to provide a cylinder lubrication system that overcomes or at least reduces the problems indicated above.

The foregoing and other objects are achieved by the features of the independent claims. Further implementation forms are apparent from the dependent claims, the description, and the figures.

According to a first aspect there is provided a cylinder lubrication system according to claim 1.

By providing a cylinder lubrication system that has a first feed path to the cylinder lubrication supply apparatus for a first cylinder lubrication liquid and a separate second feed path to the cylinder lubrication supply apparatus for a second cylinder lubrication liquid, and by providing valve means for selectively connecting either the first feed paths to the cylinder lubrication supply apparatus or the second feed path to the cylinder lubrication apparatus, a simple and reliable system is created for supplying different types of cylinder lubrication liquid to the cylinders of an engine. With this system, a first simple on-off valve, electronically controlled or manually controlled, in the first feed conduit and a second simple on-off valve, electronically controlled or manually controlled, in the second feed conduit that is needed to control the feed of the correct type of cylinder lubrication liquid to the apparatus for providing cylinder lubrication liquid.

According to a possible implementation of the first aspect the first flow control device is a valve and the second flow control device is a valve.

According to a possible implementation of the first aspect, the first feed conduit is fluidically separated from the second feed conduit.

According to a possible interpretation of the first aspect, the first feed conduit is connected to a dedicated first inlet port of the apparatus for supplying cylinder lubrication liquid and the second feed conduit is connected to a dedicated second inlet port of the apparatus for supplying cylinder lubrication liquid.

According to a possible implementation of the first aspect, the system is configured to open either the first valve or the second valve.

According to a possible implementation of the first aspect, the first valve and/or the second valve is an electronically controlled valve, preferably an electronically controlled on/off type valve.

According to a possible implementation of the first aspect the first flow control device is a first feed pump, preferably a positive displacement pump, and/or wherein the second flow control device is a second feed pump, preferably a positive displacement pump.

According to a possible implementation of the first aspect, the system is configured to activate either the first feed pump or to activate both the first feed pump and the second feed pump.

According to a possible implementation of the first aspect, the first source of cylinder lubrication liquid is a first reservoir or tank and the second source of lubrication liquid is a second reservoir or tank.

According to a possible implementation of the first aspect the first tank is at least partially filled with a first cylinder lubrication liquid, and wherein the first cylinder lubrication liquid is preferably gravity fed from the first tank (58) through the first feed conduit to the apparatus for supplying cylinder lubrication liquid.

According to a possible implementation of the first aspect the second tank is at least partially filled with a second cylinder lubrication liquid, and wherein the second cylinder lubrication liquid is preferably gravity fed from the second tank through the second feed conduit to the apparatus for supplying cylinder lubrication liquid.

According to a possible implementation of the first aspect the properties of the first cylinder lubrication liquid are different from the properties of the second cylinder lubrication liquid.

According to a possible implementation of the first aspect, the apparatus for supplying cylinder lubrication liquid (55) is provided with a first inlet connected to the first feed conduit wherein the apparatus for supplying cylinder lubrication liquid is provided with a second inlet connected to the second feed conduit.

According to the invention, the engine comprises a plurality of cylinders, and the apparatus a dedicated apparatus for supplying cylinder lubrication liquid for each cylinder, and wherein the first supply conduit is branched to connect to each apparatus for supplying cylinder lubrication liquid, and wherein the second supply conduit is branched to connect to each apparatus for supplying cylinder lubrication liquid.

According to a possible implementation of the first aspect, the apparatus for supplying cylinder lubrication liquid is provided with an inlet chamber that is connected to the first inlet and the second inlet.

These and other aspects of the invention will be apparent from the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1 is an elevated front view of a large two-stroke diesel engine according to an example embodiment,
Fig. 2 is an elevated side view of the large two-stroke engine of Fig. 1,
Fig. 3 is a diagrammatic representation the large two-stroke engine according to Fig. 1,
Fig. 4 is a longitudinal-sectional view through a cylinder liner and cylinder frame of the engine of Figs. 1 to 3,
Fig. 5 is a side view of the cylinder liner of Fig. 4,
Fig. 6 is a cross-sectional view of the cylinder liner of Fig. 4,
Fig. 7 is an elevated view of an apparatus for providing cylinder lubrication liquid according to an example embodiment,
Fig. 8 is a top view of the apparatus of Fig. 7,
Fig. 9 is a longitudinal-sectional view of the apparatus of Fig. 7,
Fig. 10 is a diagrammatic representation of a cylinder lubrication system according to an embodiment, and
Fig. 11 is a diagrammatic representation of a cylinder lubrication system according to another embodiment.

### DETAILED DESCRIPTION

In the following detailed description, an apparatus for providing cylinder lubrication liquid to the inner surface of the cylinder liners of an internal combustion engine will be described with reference to a cylinder lubrication apparatus and to a large two-stroke low-speed turbocharged internal combustion engine with crossheads in the example embodiments.

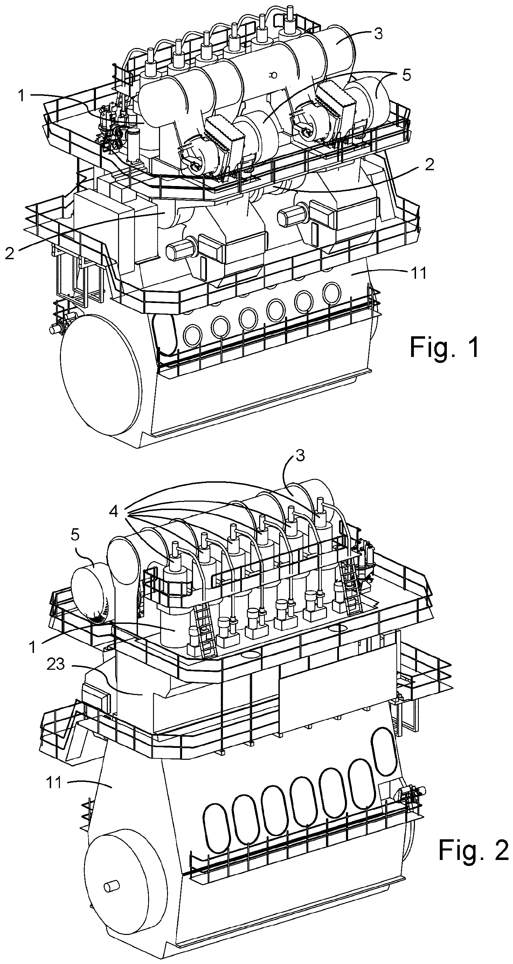

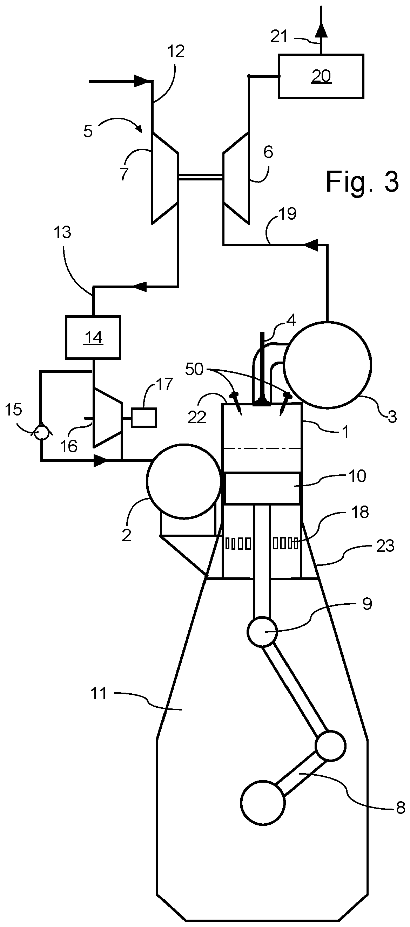

Figs. 1, 2 and 3 show a large low-speed turbocharged two-stroke diesel engine with a crankshaft 8 and crossheads 9. Fig. 3 shows a diagrammatic representation of a large low-speed turbocharged two-stroke diesel engine with its intake and exhaust systems. In this example embodiment, the engine has six cylinders in line. Large low-speed turbocharged two-stroke diesel engines have typically between four and fourteen cylinders in line, carried by a cylinder frame 23 that is carried by an engine frame 11. The engine may e.g. be used as the main engine in a marine vessel or as a stationary engine for operating a generator in a power station. The total output of the engine may, for example, range from 1,000 to 110,000 kW.

The engine is in this example embodiment a compression-ignited engine of the two-stroke uniflow type with scavenge ports 18 at the lower region of the cylinder liners 1 and a central exhaust valve 4 at the top of the cylinder liners 1. The scavenge air is passed from the scavenge air receiver 2 to the scavenge ports 18 of the individual cylinders 1. A piston 10 in the cylinder liner 1 compresses the scavenge air, fuel is injected through fuel valves 50 in the cylinder cover 22, combustion follows and exhaust gas is generated.

When an exhaust valve 4 is opened, the exhaust gas flows through an exhaust duct associated with the cylinder 1 into the exhaust gas receiver 3 and onwards through a first exhaust conduit 19 to a turbine 6 of the turbocharger 5, from which the exhaust gas flows away through a second exhaust conduit via an economizer 20 to an outlet 21 and into the atmosphere. Through a shaft, the turbine 6 drives a compressor 7 supplied with fresh air via an air inlet 12. The compressor 7 delivers pressurized scavenge air to a scavenge air conduit 13 leading to the scavenge air receiver 2. The scavenge air in the scavenge air conduit 13 passes an intercooler 14 for cooling the scavenge air.

The cooled scavenge air passes via an auxiliary blower 16 driven by an electric motor 17 that pressurizes the scavenge air flow when the compressor 7 of the turbocharger 5 does not deliver sufficient pressure for the scavenge air receiver 2, i.e. in low or partial load conditions of the engine. At higher engine loads the turbocharger compressor 7 delivers sufficient compressed scavenge air and then the auxiliary blower 16 is bypassed via a non-return valve 15.

The cylinder lubrication system can also be used on large two-stroke internal combustion engines that blow gaseous fuel into the combustion chamber through ports or valves arranged in the cylinder liner roughly in the middle of the longitudinal extent of the cylinder liner, and which compress a mixture of gaseous fuel and scavenging air in the combustion chamber and ignite the compressed mixture at or near top dead center (TDC) by timed ignition means, such as e.g. pilot oil injection.

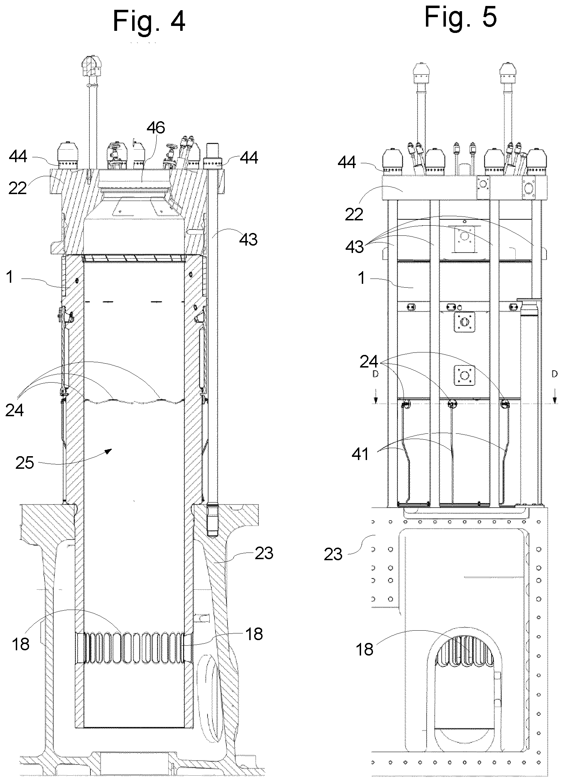

Figs. 4,5 and 6 show a single cylinder liner 1 in longitudinal sectional, side and top view, respectively. A cylinder cover 22 is clamped down on the upper longitudinal end of the cylinder liner 1 by cylinder cover studs 43 that are tightened by hydraulically tightened nuts 44. The lower ends of the cylinder cover studs 43 are anchored in the cylinder frame 23. The cylinder cover 22 is provided with a central opening 46 for the exhaust valve. The cylinder liner 1 is provided near its lower longitudinal and with an array of scavenge ports 18. The cylinder liner 1 is carried by the cylinder frame 23, with a shoulder of the cylinder liner 1 resting on the upper surface of the cylinder frame 23.

The inner surface 25 of the cylinder liner 1 is generally smooth except for relatively small recesses in which the nozzles of the injectors 24 for injecting cylinder lubrication liquid are received. The injectors 24 are arranged at substantially identical height and equally distributed around the circumference of the cylinder liner 1.

The injectors 24 are inserted into the wall of the cylinder liner 1 and extend from the outer side of the cylinder liner 1 into the cylinder liner 1 with the nozzle at the tip of the injector 24 received in the aforementioned small recesses in the inner surface 25. The injectors 24 serve to inject the cylinder lubrication liquid onto the inner surface 25 of the cylinder liner 1. Various techniques are used to ensure that the injected cylinder lubrication liquid ends up on the inner surface 25. Some techniques spray the injected cylinder lubrication liquid directly from the nozzle holes onto the inner surface 25 before the piston 10 reaches the height at which the injectors 24 are arranged during the compression stroke. Another technique injects the cylinder lubrication liquid exactly at the moment where the piston 10 is at the height of the injectors 24 during the compression stroke so that the cylinder lubrication liquid is injected between the piston rings of the piston 10. Any type of technology that ensures that the cylinder lubrication liquid arrives at the inner surface of the cylinder liner 25 can be used with the present invention.

The injectors 24 are connected via respective supply conduits 41 to an apparatus for supplying cylinder lubrication liquid 55.

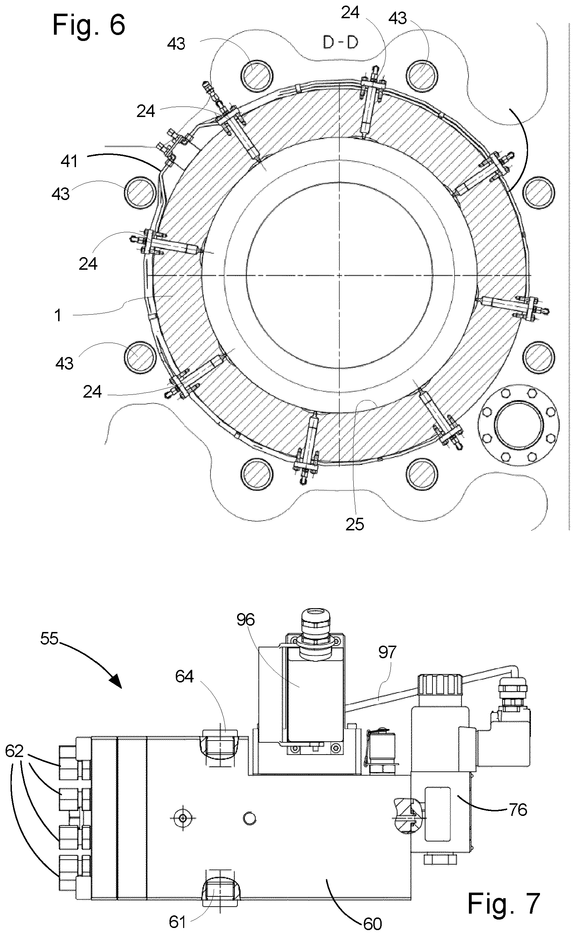

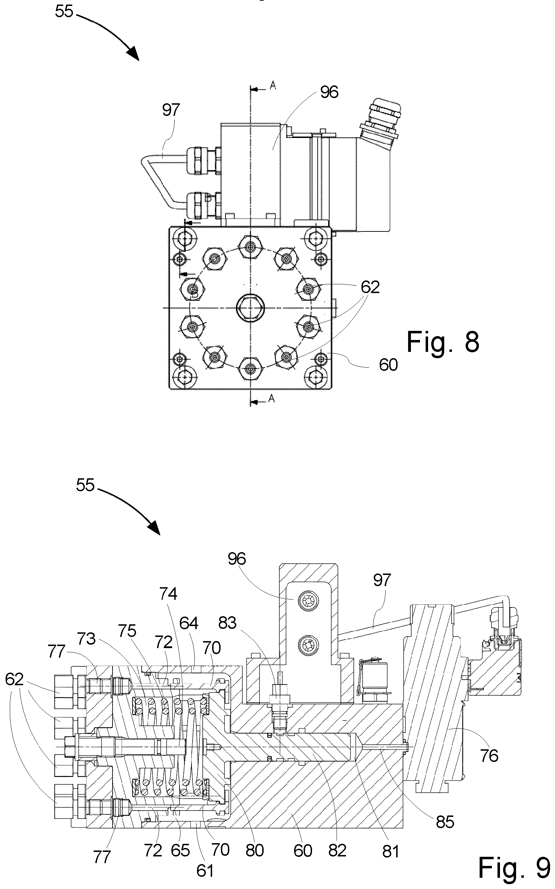

Figs. 7, 8, 9, illustrate an apparatus 55 for providing cylinder lubrication liquid to the inner surface 25 of the cylinders 1, in elevated, top, longitudinal-sectional, and enlarged views, respectively. The cylinder lubrication apparatus 55 comprises a housing 60 that is in the present embodiment assembled from several components but could be formed from a single component.

The cylinder lubrication apparatus 55 comprises a plurality of positive displacement pumps that are formed by a plurality of dosing plungers 70 slidably disposed in corresponding dosing cylinders 72. In the present example, there are 10 positive displacement pumps in the apparatus 55, it is however understood that that could be less than 10 or more than 10 positive displacement pumps, depending on the needs of the engine/cylinders one.

The cylinder lubrication apparatus 55 also includes a linear actuator that is configured to move all dosing plungers 70 simultaneously during pump- and suction strokes. The linear actuator is operably connected to all of the dosing plungers 70 via a common drive 80.

The linear actuator is in the shown embodiment a linear hydraulic actuator that comprises a drive piston 82 received in a matching bore disposed in the housing 60. The drive piston 82 is provided with grooves that are detected by a position sensor 83 (e.g. an inductive sensor). The drive piston 82 defines a drive chamber 81 in the housing 60 together with the matching bore. However, it is understood that the hydraulic actuator could also be a completely separate component with its own housing. Further, it is understood that the linear actuator does not need to be a hydraulic linear actuator but could just as well be a mechanical actuator, for example using a rotating cam, a pneumatic actuator linear or an electric linear actuator.

A concentric set of helical springs 75 is disposed in a spring chamber 73. The helical springs 75 serve to bias the common drive 80 resiliently towards the position where the dosing plungers 70 are fully retracted i.e. to make the suction stroke. The common drive 80 is partially disposed in the spring chamber 73.

In the present embodiment the linear actuator is a single-acting linear hydraulic actuator that is configured to power the pump stroke for the dosing plungers 70 via the common drive 80, whilst the return (suction) stroke of the dosing plungers 70 is powered by the helical wire spring 75. However, helical wire springs 75 can be replaced by any other suitable resilient means for resiliently biasing the common drive 80 towards the retracted position of the dosing plungers 70. Alternatively, the linear actuator can be a double-acting linear actuator that powers both the pump stroke and the suction stroke of the dosing plungers 70.

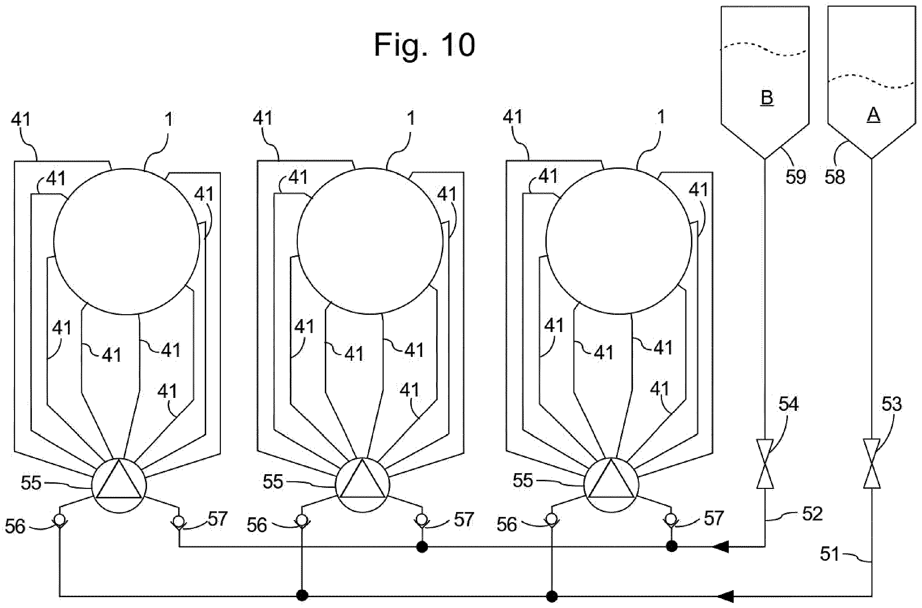

A pump chamber is formed in each dosing cylinder 72. Each pump chamber is connected to a cylinder lubrication inlet chamber 65 when the dosing plungers 72 are in a retracted position. The cylinder lubrication liquid in the inlet chamber 65 is connected to at least two sources of cylinder lubrication liquid 58,59 (Fig. 10) via first and second cylinder lubrication inlet ports 61 and 62. When the dosing plungers 70 are retracted the pump chambers are refilled with cylinder lubrication liquid from the inlet chamber, which in turn can come from either source of cylinder lubrication 58,59 liquid via the cylinder lubrication liquid inlet port 61,64 and. Each pump chamber is connected to an outlet port 62 via a passage 77. Each outlet port 62 is connected to an injector 24 via a supply conduit 41.

When the dosing plungers 70 simultaneously move into the dosing cylinders during a pump stroke the cylinder lubrication liquid in the pump chambers is forced out of the pump chambers via respective passages 77, respective outlet ports 62, respective supply conduits 41 to respective injectors 24, and into the cylinder, i.e. each dosing plunger is in an embodiment connected to a single injector 24.

An electro-hydraulic valve 76, e.g. a 3/2-way solenoid valve, selectively connects the actuation chamber 81 to a source of hydraulic pressure (not shown) or to tank (not shown). The electrohydraulic valve 76 is in receipt of a control signal from e.g. a system electronic control unit (not shown) or of an engine electronic control unit (not shown). The connection with the electronic control unit is established via a plug 96 and cable 97.

When the electro-hydraulic valve 76 connects the bore 85 to the source of hydraulic pressure the actuation chamber 81 is pressurized and the drive piston 82 applies a force in the direction of the pump stroke to the common drive 80 and thereby to the dosing plungers 70 for making a pump stroke. The pump stroke is mechanically limited by a first mechanical end stop that is in this embodiment formed by a set screw 74.

When the electro-hydraulic valve 77 connects the first port 84 to tank the drive piston 82 does not apply any significant force to the common drive 80 and thus the helical spring 70 urges the dosing plungers 70 back to their retracted position thereby making a suction stroke. The helical springs 70 will move the common drive 80 in the direction of the suction stroke until common drive 80 abuts with the housing 60.

Fig. 10 is a diagrammatic representation of the system for supplying cylinder lubrication oil to the cylinders 1 of a large two-stroke internal combustion engine. The system comprises an apparatus 55, e.g. of the type described in detail above, for timed and dosed delivery of cylinder lubrication liquid to the cylinder 1 with which the apparatus 55 is associated via the individual supply conduit 41. In the present embodiment, each apparatus 55 is provided with two separate inlets. In the shown embodiment of Fig. 10, each apparatus 55 has eight outlets, that are each connected to a supply conduit 41. However, a different number of outlets and supply conduits 41 can be used. For example, in the embodiment described above the apparatus 55 has 10 outlets each of these elements will be connected to an injector 24 of the associated cylinder 1 via an individual supply conduit 41.

The system comprises a first reservoir tank 58 that contains a first cylinder lubrication liquid A and a second reservoir tank 59 that contains a second lubrication liquid B.

The first tank 58 is connected to an inlet port of each of the apparatus is 55. Hereto, a first feed conduit 51 extends from the outlet at or near the bottom of the first tank 58 to the apparatuses 55. The first feed conduit 51 is branched so that it connects to an inlet of each apparatus 55. In an embodiment, the first feed conduit 51 is provided with a non-return valve 56 at a position relatively close to the inlet of the apparatus 55 concerned, to prevent return flow from the apparatus 55 concerned.

The second tank 59 is connected to an inlet port of each of the apparatus is 55. Hereto, a second feed conduit 52 extends from the outlet at or near the bottom of the second tank 59 to the apparatuses 55. The second feed conduit 52 is branched so that it connects to an inlet of each apparatus 55. In an embodiment, the second feed conduit 52 is provided with a non-return valve 57 at a position relatively close to the inlet of the apparatus 55 concerned, to prevent return flow from the apparatus 55 concerned.

In the present embodiment, the flow from the first tank 58 to the apparatuses 55 is driven by gravity.

A first valve 53 is arranged in the first supply conduit 51 in order to control the flow from the first tank 58 to the apparatuses 55. A second valve 54, is arranged in the second supply conduit 52 in order to control the flow from the second tank 58 to the apparatuses 55. In an embodiment, the first valve 53 and the second valve 54 are completely separate and independent valves. In this embodiment either the first valve 53 or the second valve 54 is opened or both the first valve 53 and the second valve 54 are closed. When first valve 53 is opened the first cylinder lubrication liquid A flows driven by gravity through the first feed conduit 51 to the apparatuses 55. When the second valve 54 is opened the second cylinder lubrication liquid B flows driven by gravity through the second feed conduit 52 to the apparatuses 55. When both the first valve 53 and the second valve 54 closed, there is no flow of cylinder lubrication liquid to the apparatuses 55.

By alternatingly opening the first valve 53 and the second valve 54, the first cylinder lubrication liquid A and the second cylinder lubrication liquid B are alternatingly fed to the apparatuses 55 and mixed in the apparatuses 55, so that the cylinders 1 of the engine are fed with a mixture of the first cylinder lubrication liquid A and the second cylinder lubrication liquid B.

In an embodiment (not shown) the first valve 53 and second valve 54 are arranged in one valve block but configured to be able to independently open either one of the valves or to close both valves simultaneously. In another embodiment (not shown) the first valve 53 is arranged to be closed when the second valve 54 is open and vice versa.

The first valve 53 and the second valve 54 can be manually operated valves or remotely controlled valves, e.g. electrohydraulic valves that are controlled by a signal from a system electronic control unit (not shown) or by an engine electronic control unit (not shown). In an embodiment, the (system for engine) electronic control unit is configured to automatically select the appropriate cylinder lubrication liquid in accordance with the properties of the fuel that is used and/or the operating conditions of the engine.

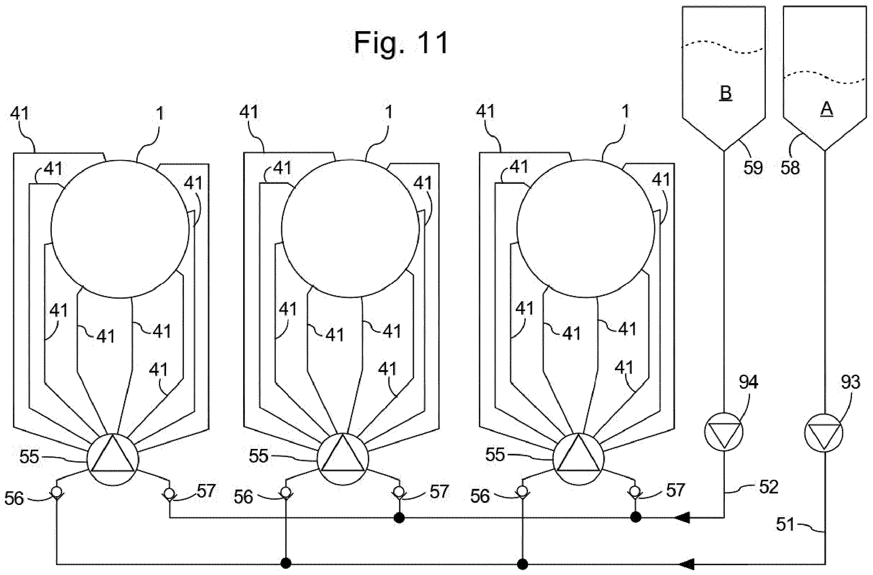

Fig. 11 is a diagrammatic representation of another embodiment of the system for supplying cylinder lubrication oil to the cylinders 1 of a large two-stroke internal combustion engine. In this embodiment, structures and features that are the same or similar to corresponding structures and features previously described or shown herein are denoted by the same reference numeral as previously used for simplicity. The embodiment of Fig. 11 is essentially identical to the embodiment of Fig. 10, except that the devices for enabling or disabling the flow through the first and second feed conduits 51, 52 in this embodiment is formed a first and second feed pump 93, 94, and the cylinder lubrication liquids are not fed by gravity but instead force-fed by the feed pumps.

In this embodiment, the first feed pump 93 is a positive displacement pump and the second feed pump 94 is a positive displacement pump, that can be individually controlled and particularly individually be activated and deactivated. An operator or an electronic control unit determines which of the feed pumps 94,95 is active.

When only the first feed pump 93 is active the first cylinder lubrication liquid A is pumped from the first tank 58 to the cylinder lubrication devices 55, and the cylinders 1 of the engine are lubricated with the first cylinder lubrication liquid A. When only the first feed pump 93 is active the second cylinder lubrication liquid B is pumped from the first tank 58 to the cylinder lubrication devices 55 and the cylinders 1 of the engine are lubricated with the second cylinder lubrication liquid B. When both the first feed pump 93 and the second feed pump 94 are active alternatingly the first cylinder lubrication liquid A and the second cylinder lubrication liquid B are pumped to the cylinder lubrication devices 55 alternatingly and mixed in the cylinder lubrication devices 55 and the cylinders 1 of the engine are lubricated with a mixture of the first cylinder lubrication liquid A and the second cylinder lubrication liquid B.

In a variation of both embodiments above, the apparatuses 55 have two separate inlets for cylinder lubrication liquid, a first inlet 61 connected to the first supply conduit 51 and a second inlet 64 connected to the second supply conduit 52. In this embodiment, the apparatus 55 is configured to aspirate cylinder lubrication liquid from whichever inlet port 61, 64 cylinder lubrication liquid is available. Thus, when either the first valve 53 or the second valve 54 is open, cylinder lubrication liquid from either the first tank 58 or from the second tank 59 is aspirated into the apparatus 55. The apparatus 55 supplies the aspirated cylinder lubrication liquid to the associated cylinder 1. The apparatus 55 supplies this cylinder lubrication liquid in a precisely dosed and timed manner.

The first cylinder lubrication liquid (A) has in an embodiment different properties from the second cylinder lubrication liquid (B). The difference in properties can be e.g. in kinematic viscosity or alkalinity. The viscosity of cylinder lubrication liquids is typically indicated in cSt at 100 deg. Celsius or by their SEA number and their potential to neutralize acidic combustion products, i.e. their "alkalinity" is indicated by their Base number (BN).

Thus, in an example, the first tank 58 contains the first lubrication liquid (A) with a BN of 100 and a kinematic viscosity of 20 cSt at 100°C, and the second tank 59 contains the second lubrication liquid (B) with a BN of 25 and a kinematic viscosity of 20 cSt at 100°C. Thus, only the BN of the two lubrication liquids is different in this example, however, it is understood that both the BN and the viscosity can be different for the first and second cylinder lubrication liquids.

In operation, the first cylinder lubrication liquid (A) of the example above is used when the engine is operated on a fuel with a high sulfur content fuel and the second lubrication liquid (B) of the example above is used when the engine is operated on a fuel with an ultralow to low sulfur content.

Thus, the cylinder lubrication liquid supply system is able to deliver for lubrication liquid with different properties from different reservoirs containing different cylinder lubrication liquids to the cylinders of the large two-stroke internal combustion engine, simply by opening the valve associated with the reservoir in which the cylinder lubrication liquid with the desired properties is stored. In an embodiment, the system comprises three or more reservoirs, three or more supply conduits, and three or more valves.

The term "comprising" as used in the claims does not exclude other elements or steps. The term "a" or "an" as used in the claims does not exclude a plurality. The electronic control unit may fulfill the functions of several means recited in the claims. The reference signs used in the claims shall not be construed as limiting the scope. Although the present invention has been described in detail for purpose of illustration, it is understood that such detail is solely for that purpose, and variations can be made therein by those skilled in the art without departing from the scope of the appended claims.

## Claims

1. A cylinder lubrication system for supplying cylinder lubrication liquid to the inner surface (25) of a cylinder liner (1) of a large two-stroke uniflow internal combustion engine via a plurality of injectors (24) that are distributed around the circumference of said cylinder liner (1), said cylinder liner (1) defining a cylindrical interior in which a reciprocating piston (10) is slidably disposed, said cylinder lubrication system comprising:
a first source of cylinder lubrication liquid (58),
a second source of cylinder lubrication liquid (59),
a cylinder lubrication supply apparatus (55) for each cylinder,
supply conduits (41) connecting outlets (62) of said cylinder oil supply apparatus (55) to each of said injectors (24),
a first feed conduit (51) connecting an inlet (61) of said cylinder lubrication apparatus (55) to said first source of cylinder lubrication liquid (58),
a second feed conduit (52) connecting an inlet (64) of said cylinder lubrication apparatus (55) to said second source of cylinder lubrication liquid (59),
a first flow control device (53,93) in said first feed conduit (51) capable of enabling and disabling flow through said first feed conduit (51), and
a second flow control device (54,94) in said second feed conduit (52) capable of enabling and disabling flow through said second feed conduit (52),
**characterized in that** the engine comprises a plurality of cylinders (1), and wherein the system is provided with a dedicated apparatus for supplying cylinder lubrication liquid (55) for each cylinder (1), and **in that** said first supply conduit (51) is branched to connect to each apparatus for supplying cylinder lubrication liquid (55), and wherein said second supply conduit (52) is branched to connect to each apparatus for supplying cylinder lubrication liquid (55).

2. The system according to claim 1, wherein said first flow control device is a valve (53), and wherein said second flow control device is a valve (54).

3. The system according to claim 2, wherein said system is configured to open either said first valve (53) or said second valve (54).

4. The system according to claim 2 or 3, wherein said first valve (53) and/or said second valve (54) is an electronically controlled valve, preferably an electronically controlled on/off type valve.

5. The system according to claim 1, wherein said first flow control device is a first feed pump (93), preferably a positive displacement pump, and wherein said second flow control device is a second feed pump (94), preferably a positive displacement pump.

6. The system according to claim 5, wherein said system is configured to activate either said first feed pump (93) or to activate said second feed pump (94) or to activate both said first feed pump (93) and said second feed pump (94).

7. The system according to any one of claims 1 to 6, wherein said first source of cylinder lubrication liquid (50) is a first tank (58) and said second source of lubrication liquid (59) is a second tank (59).

8. The system according to claim 7 when dependent on any one of claims 1 to 4, wherein said first tank (58) is at least partially filled with a first cylinder lubrication liquid (A), and wherein said first cylinder lubrication liquid (A) is preferably gravity fed from said first tank (58) through said first feed conduit (51) to said apparatus for supplying cylinder lubrication liquid (55).

9. The system according to claim 7 when dependent on any one of claims 1 to 4 or 8, wherein said second tank (59) is at least partially filled with a second cylinder lubrication liquid (B), and wherein said second cylinder lubrication liquid (B) is preferably gravity fed from said second tank (59) through said second feed conduit (52) to said apparatus for supplying cylinder lubrication liquid (55) .

10. The system according to any one of claims 7 to 9, wherein the properties of said first cylinder lubrication liquid (A) are different from the properties of said second cylinder lubrication liquid (B).

11. The system according to any one of claims 1 to 10, wherein said apparatus for supplying cylinder lubrication liquid (55) is provided with a first inlet (61) connected to said first feed conduit (51) wherein said apparatus for supplying cylinder lubrication liquid (55) is provided with a second inlet (64) connected to said second feed conduit (52) .

12. The system according to any one of claims 1 to 11, wherein said apparatus for supplying cylinder lubrication liquid (55) is provided with an inlet chamber (65) that is connected to said first inlet (61) and said second inlet (64) .

## Patentansprüche

1. Zylinderschmiersystem zum Zuführen von Zylinderschmierflüssigkeit zur Innenseite (25) einer Zylinderlaufbuchse (1) eines großen Zweitakt-Verbrennungsmotors mit Gleichstromspülung über mehrere Einspritzdüsen (24), welche über den Umfang der Zylinderlaufbuchse (1) verteilt sind, wobei die Zylinderlaufbuchse (1) einen zylindrischen Innenraum definiert, in welchem ein hin- und hergehender Kolben (10) verschiebbar angeordnet ist, wobei das Zylinderschmiersystem umfasst:
eine erste Quelle von Zylinderschmierflüssigkeit (58),
eine zweite Quelle von Zylinderschmierflüssigkeit (59),
eine Zylinderschmierungs-Zuführvorrichtung (55) für jeden Zylinder,
Zuführungsleitungen (41), welche Auslässe (62) der Zylinderöl-Zuführvorrichtung (55) mit den einzelnen Einspritzdüsen (24) verbinden,
eine erste Förderleitung (51), die einen Einlass (61) der Zylinderschmiervorrichtung (55) mit der ersten Quelle von Zylinderschmierflüssigkeit (58) verbindet,
eine zweite Förderleitung (52), die einen Einlass (64) der Zylinderschmiervorrichtung (55) mit der zweiten Quelle von Zylinderschmierflüssigkeit (59) verbindet,
eine erste Durchflusssteuervorrichtung (53, 93) in der ersten Förderleitung (51), die in der Lage ist, einen Durchfluss durch die erste Förderleitung (51) zu ermöglichen und zu sperren, und
eine zweite Durchflusssteuervorrichtung (54, 94) in der zweiten Förderleitung (52), die in der Lage ist, einen Durchfluss durch die zweite Förderleitung (52) zu ermöglichen und zu sperren,
**dadurch gekennzeichnet, dass** der Motor mehrere Zylinder (1) umfasst, und wobei das System mit einer speziellen Vorrichtung zum Zuführen von Zylinderschmierflüssigkeit (55) für jeden Zylinder (1) versehen ist, und dadurch, dass die erste Zuführungsleitung (51) verzweigt ist, so dass sie mit jeder Vorrichtung zum Zuführen von Zylinderschmierflüssigkeit (55) verbunden ist, und wobei die zweite Zuführungsleitung (52) verzweigt ist, so dass sie mit jeder Vorrichtung zum Zuführen von Zylinderschmierflüssigkeit (55) verbunden ist.

2. System nach Anspruch 1, wobei die erste Durchflusssteuervorrichtung ein Ventil (53) ist und wobei die zweite Durchflusssteuervorrichtung ein Ventil (54) ist.

3. System nach Anspruch 2, wobei das System dafür ausgelegt ist, entweder das erste Ventil (53) oder das zweite Ventil (54) zu öffnen.

4. System nach Anspruch 2 oder 3, wobei das erste Ventil (53) und/oder das zweite Ventil (54) ein elektronisch gesteuertes Ventil ist, vorzugsweise ein elektronisch gesteuertes Ein/Aus-Ventil.

5. System nach Anspruch 1, wobei die erste Durchflusssteuervorrichtung eine erste Förderpumpe (93) ist, vorzugsweise eine Verdrängerpumpe, und wobei die zweite Durchflusssteuervorrichtung eine zweite Förderpumpe (94) ist, vorzugsweise eine Verdrängerpumpe.

6. System nach Anspruch 5, wobei das System dafür ausgelegt ist, entweder die erste Förderpumpe (93) zu aktivieren oder die zweite Förderpumpe (94) zu aktivieren oder sowohl die erste Förderpumpe (93) als auch die zweite Förderpumpe (94) zu aktivieren.

7. System nach einem der Ansprüche 1 bis 6, wobei die erste Quelle von Zylinderschmierflüssigkeit (50) ein erster Behälter (58) ist und die zweite Quelle von Schmierflüssigkeit (59) ein zweiter Behälter (59) ist.

8. System nach Anspruch 7, wenn abhängig von einem der Ansprüche 1 bis 4, wobei der erste Behälter (58) wenigstens teilweise mit einer ersten Zylinderschmierflüssigkeit (A) gefüllt ist und wobei die erste Zylinderschmierflüssigkeit (A) vorzugsweise durch Schwerkraftzuführung aus dem ersten Behälter (58) durch die erste Förderleitung (51) zu der Vorrichtung zum Zuführen von Zylinderschmierflüssigkeit (55) gelangt.

9. System nach Anspruch 7, wenn abhängig von einem der Ansprüche 1 bis 4 oder 8, wobei der zweite Behälter (59) wenigstens teilweise mit einer zweiten Zylinderschmierflüssigkeit (B) gefüllt ist und wobei die zweite Zylinderschmierflüssigkeit (B) vorzugsweise durch Schwerkraftzuführung aus dem zweiten Behälter (59) durch die zweite Förderleitung (52) zu der Vorrichtung zum Zuführen von Zylinderschmierflüssigkeit (55) gelangt.

10. System nach einem der Ansprüche 7 bis 9, wobei die Eigenschaften der ersten Zylinderschmierflüssigkeit (A) von den Eigenschaften der zweiten Zylinderschmierflüssigkeit (B) verschieden sind.

11. System nach einem der Ansprüche 1 bis 10, wobei die Vorrichtung zum Zuführen von Zylinderschmierflüssigkeit (55) mit einem ersten Einlass (61) versehen ist, der mit der ersten Förderleitung (51) verbunden ist, wobei die Vorrichtung zum Zuführen von Zylinderschmierflüssigkeit (55) mit einem zweiten Einlass (64) versehen ist, der mit der zweiten Förderleitung (52) verbunden ist.

12. System nach einem der Ansprüche 1 bis 11, wobei die Vorrichtung zum Zuführen von Zylinderschmierflüssigkeit (55) mit einer Einlasskammer (65) verbunden ist, welche mit dem ersten Einlass (61) und dem zweiten Einlass (64) verbunden ist.

## Revendications

1. Système de lubrification de cylindre pour alimenter un liquide de lubrification de cylindre sur la surface intérieure (25) d'une chemise de cylindre (1) d'un gros moteur à combustion interne uniflow à deux temps via une pluralité d'injecteurs (24) qui sont répartis autour de la circonférence de ladite chemise de cylindre (1), ladite chemise de cylindre (1) définissant un intérieur cylindrique dans lequel un piston alternatif (10) est disposé de façon coulissante, ledit système de lubrification de cylindre comprenant :
une première source de liquide de lubrification de cylindre (58),
une deuxième source de liquide de lubrification de cylindre (59),
un appareil d'alimentation en lubrification de cylindre (55) pour chaque cylindre,
des conduits d'alimentation (41) raccordant les sorties (62) dudit appareil d'alimentation en huile de cylindre (55) à chacun desdits injecteurs (24),
un premier conduit d'alimentation (51) raccordant une entrée (61) dudit appareil de lubrification de cylindre (55) à ladite première source de liquide de lubrification de cylindre (58),
un deuxième conduit d'alimentation (52) raccordant une entrée (64) dudit appareil de lubrification de cylindre (55) à ladite deuxième source de liquide de lubrification de cylindre (59),
un premier dispositif de régulation d'écoulement (53, 93) dans ledit premier conduit d'alimentation (51) capable d'activer et de désactiver l'écoulement à travers ledit premier conduit d'alimentation (51), et
un deuxième dispositif de régulation d'écoulement (54, 94) dans ledit deuxième conduit d'alimentation (52) capable d'activer et de désactiver l'écoulement à travers ledit deuxième conduit d'alimentation (52),
**caractérisé en ce que** le moteur comprend une pluralité de cylindres (1), et dans lequel le système est pourvu d'un appareil dédié pour alimenter du liquide de lubrification de cylindre (55) pour chaque cylindre (1), et **en ce que** ledit premier conduit d'alimentation (51) est ramifié pour se raccorder à chaque appareil pour alimenter du liquide de lubrification de cylindre (55), et dans lequel ledit deuxième conduit d'alimentation (52) est ramifié pour se raccorder à chaque appareil pour alimenter du liquide de lubrification de cylindre (55).

2. Système selon la revendication 1, dans lequel ledit premier dispositif de régulation d'écoulement est une soupape (53), et dans lequel ledit deuxième dispositif de régulation d'écoulement est une soupape (54).

3. Système selon la revendication 2, dans lequel ledit système est configuré pour ouvrir soit ladite première soupape (53) soit ladite deuxième soupape. (54).

4. Système selon la revendication 2 ou 3, dans lequel ladite première soupape (53) et/ou ladite deuxième soupape (54) est une soupape à commande électronique, de préférence une soupape de type marche/arrêt à commande électronique.

5. Système selon la revendication 1, dans lequel ledit premier dispositif de régulation d'écoulement est une première pompe d'alimentation (93), de préférence une pompe volumétrique, et dans lequel ledit deuxième dispositif de régulation d'écoulement est une deuxième pompe d'alimentation (94), de préférence une pompe volumétrique.

6. Système selon la revendication 5, dans lequel ledit système est configuré pour activer soit ladite première pompe d'alimentation (93), soit pour activer ladite deuxième pompe d'alimentation (94), soit pour activer à la fois ladite première pompe d'alimentation (93) et ladite deuxième pompe d'alimentation (94).

7. Système selon une quelconque des revendications 1 à 6, dans lequel ladite première source de liquide de lubrification de cylindre (50) est un premier réservoir (58) et ladite deuxième source de liquide de lubrification (59) est un deuxième réservoir (59).

8. Système selon la revendication 7 lorsqu'elle dépend d'une quelconque des revendications 1 à 4, dans lequel ledit premier réservoir (58) est au moins partiellement rempli d'un premier liquide de lubrification de cylindre (A), et dans lequel ledit premier liquide de lubrification de cylindre (A) est de préférence alimenté par gravité depuis ledit premier réservoir (58) à travers ledit premier conduit d'alimentation (51) vers ledit appareil pour alimenter du liquide de lubrification de cylindre (55).

9. Système selon la revendication 7 lorsqu'elle dépend d'une quelconque des revendications 1 à 4 ou 8, dans lequel ledit deuxième réservoir (59) est au moins partiellement rempli d'un deuxième liquide de lubrification de cylindre (B), et dans lequel ledit deuxième liquide de lubrification de cylindre (B) est de préférence alimenté par gravité depuis ledit deuxième réservoir (59) à travers ledit deuxième conduit d'alimentation (52) vers ledit appareil pour alimenter du liquide de lubrification de cylindre (55).

10. Système selon une quelconque des revendications 7 à 9, dans lequel les propriétés dudit premier liquide de lubrification de cylindre (A) sont différentes des propriétés dudit deuxième liquide de lubrification de cylindre (B).

11. Système selon une quelconque des revendications 1 à 10, dans lequel ledit appareil pour alimenter du liquide de lubrification de cylindre (55) est pourvu d'une première entrée (61) raccordée audit premier conduit d'alimentation (51), dans lequel ledit appareil pour alimenter du liquide de lubrification de cylindre (55) est pourvu d'une deuxième entrée (64) raccordée audit deuxième conduit d'alimentation (52).

12. Système selon une quelconque des revendications 1 à 11, dans lequel ledit appareil pour alimenter du liquide de lubrification de cylindre (55) est pourvu d'une chambre d'entrée (65) qui est reliée à ladite première entrée (61) et à ladite deuxième entrée (64).
